# EUROPÄISCHE PATENTANMELDUNG

(11) **EP 1 845 354 A2**
(43) Veröffentlichungstag der Anmeldung: **17.10.2007**
(21) Anmeldenummer: 07006514.9
(22) Anmeldetag: 29.03.2007
(51) Int. Cl.: G01M 19/00

(54) **Verfahren und Vorrichtung zur Komfortbewertung von Sitz-, Liege- und Stützpolstern, insbesondere für Fahrzeugsitze**

(30) Priorität: 11.04.2006 DE 102006017726
(71) Anmelder: IAV GmbH Ingenieurgesellschaft Auto und Verkehr, 10587 Berlin (DE)
(72) Erfinder: Klinge, Michael, 39343 Uhrsleben (DE); Müller, André, 21337 Lüneburg (DE); Ullrich, Peter, 38102 Braunschweig (DE); Zottmann, Detlef, 38518 Gifhorn (DE)
(74) Vertreter: Bürger, Peter

(57) **Zusammenfassung**

Die Erfindung betrifft ein Verfahren und eine Vorrichtung zur Komfortbewertung von Polstern, insbesondere bei Fahrzeugsitzen, bei welchen durch wenigstens einen Prüfstempel (11) flächig eine Druckkraft auf eine Polsteroberfläche aufgebracht wird. Es wird dabei über ein Wegmesssystem (6) die Verformung bei einer vordefinierten, quasistatisch wirkenden Kraft aufgenommen und nachfolgend das Ausschwingen der Polsterung bei abruptem Beenden der Krafteinwirkung über die Bewegung des Prüfstempels (11) aufgenommen, wobei zur Komfortbewertung die Verformung bei quasistatischer Krafteinwirkung und beim Ausschwingen ausgewertet werden. Die Vorrichtung weist dafür einen Antrieb (10) und eine getrennt von diesem ausgeführte Stempelführung (8) mit Auslösemechanismus für den Prüfstempel (11) auf.

## Beschreibung

Die Erfindung betrifft ein Verfahren zur Komfortbewertung von Sitz-, Liege- und Stützpolstern einschließlich deren Unterfederung, insbesondere für Fahrzeugsitze und eine Vorrichtung zur Durchführung des Verfahrens mit den im Oberbegriff der in den Patentansprüchen genannten Merkmalen.

Vorbekannt ist durch die Schrift DE 196 01 974 A1 ein Verfahren zur Beurteilung des Sitzkomforts eines Sitzpolsters, welches für die Komfortuntersuchung mechanisch belastet wird. Die Belastung kann mit unterschiedlich großen Testpersonen durchgeführt werden oder erfolgt mit einem speziell gestalteten Druckstempel, welcher in den zu testenden Fahrzeugsitz gedrückt wird. Während der Belastung wird die Druckverteilung auf der Sitzfläche oder auch auf der Lehnenfläche mit einer zwischen Sitz und Druckstempel gelegten Messmatte ermittelt.

Vorbekannt ist durch die Schrift DE 198 10 641 A1 eine Vorrichtung zur Beurteilung des Sitzkomforts eines Sitzpolsters, wobei ein speziell gestalteter Sitzprüfstempel in den zu testenden Fahrzeugsitz gedrückt wird und die Form des Stempels eine möglichst realitätsnahe Belastung des Sitzes gewährleistet. Mit der Vorrichtung werden mehrere auswechselbare Druckstücke wahlweise in die selbe Arbeitsstellung gebracht. Es ist vorgesehen, Druckgröße und Anpressdruck zu variieren, um unterschiedliche Sitzbelastungen zu simulieren. Die Druckmessung erfolgt über eine zwischenliegende Messmatte.
Es ist weiterhin eine Messvorrichtung zur Erfassung der Form von Fahrzeugsitzen durch die Schrift DE 36 43 178 A1 vorbekannt, bei welcher mittels einer Messung im unbelasteten Zustand des Sitzes und einer belasteten Messung das Profil, das Polstervolumen sowie die Sitzhärte ermittelt werden. Die Messvorrichtung besteht aus einer Führungseinrichtung und einer großen Anzahl von Abtaststangen. An den Enden der Abtaststangen befinden sich halbkugelförmige Tastkörper. Die für die Erreichung einer bestimmten und messbaren Eindrucktiefe der Tastkörper im Fahrzeugsitz erforderliche Belastung muss mit einer Testperson erfolgen. Das Körpergewicht überträgt sich über die Abtaststangen auf das Sitzpolster. Die eingedrückten Wege der Abtaststangen werden festgehalten. Über eine große Anzahl von Messpunkten erhält man so die Form der Polsterfläche. Aus den Messungen lassen sich Aussagen über die Härte des Sitzpolsters treffen. Vorbekannt ist weiterhin aus der DE 101 08 372 A1 ein Verfahren und eine Vorrichtung zur Komfortbewertung von Polstern, bei welchen flächig verteilt eine Aufnahme der Eindrücktiefe von hydraulisch betätigten Abtaststangen in eine Polsterung erfolgt. Es können unterschiedliche Andruckkräfte vorgegeben werden, wobei eine Möglichkeit der Auswertung die Aufnahme der Differenz der Eindrücktiefen bei verschiedenen Belastungen ist.
Vorbekannt ist aus der DE 41 39 697 C2 ein Verfahren zur Messung von Polstern, bei welchem verschiedene Messwagen die Polsterung einer Matratze vermessen. In einer Ausführung wird eine konstante Messkraft mittels einer Feder erzeugt und in einer weiteren Ausführung ist eine impulsartige Kraft auf die Polsteroberfläche aufbringbar. Der Stößel wird dabei kurzzeitig mittels der Erregung durch eine Spule zur Polsteroberfläche beschleunigt und dessen Bewegung sowie dessen Nachschwingen wird messtechnisch erfasst. Die Vorrichtung ist dabei ungeeignet, einen konstanten Verfahrweg des Stempels in die Polsterung zu ermöglichen. Eine Bestimmung der Steifigkeit des Polsters ist lediglich durch den einwirkenden Kraftimpuls nicht möglich. Bereits beim impulsartigen Eindringen des Stößels in die Polsteroberfläche wirkt die Dämpfung dem Stößel entgegen. Das impulsartige Eindringen verfälscht damit die Amplitude der sich ergebenden Schwingung, wobei die Dämpfungswerte durch die noch nicht abgeklungenen Übergangsvorgänge im Polster vor dem Ausschwingen mit beeinflusst werden. Für eine Bestimmung der Polstereigenschaften mit konstanter Kraft und dynamischer Belastung müssen unterschiedliche Schlitten gewählt werden.
Weiterhin vorbekannt ist aus der DD 282 522 A5 eine Prüfvorrichtung für Polster, bei welcher die Dämpfung der Polsterung bei dynamischer Belastung mittels eines Fallversuches ermittelt wird. Der Fallversuch weist ebenso die dynamischen Nachteile beim Einfedern hinsichtlich der Ermittlung der Dämpfung auf. Die Vorrichtung muss für eine statische und nachfolgende dynamische Belastung umgebaut werden.

Die beschriebenen Lösungen zur Komfortbeurteilung von Sitzpolstern und dergleichen haben den Nachteil, dass getrennt entweder dynamische oder statische Messwerte aufgenommen werden und mit den die Vorrichtungen bzw. Verfahren zur Bewertung sowohl quasistatischer Verformung und dynamischer Dämpfung des Polstermaterials nicht mit hinreichender Genauigkeit in einem zusammenhängenden Messvorgang erfolgen können.

Es ist die Aufgabe der Erfindung, ein Verfahren und eine Vorrichtung zur Bestimmung von Komfortkennwerten für Sitz-, Liege- und Stützflächen von gepolsterten Oberflächen anzugeben, welche in einem zusammenhängenden Messvorgang sowohl dynamische als auch quasistatische Parameter der Polsterung ermitteln.

Die erfindungsgemäße Lösung der Aufgabe erfolgt für Verfahren und Vorrichtungen gemäß der Oberbegriffe der unabhängigen Ansprüche 1 und 4 durch die im kennzeichnenden Teil dieser Patentansprüche genannten Merkmale.

Das Verfahren zur Komfortbewertung von Sitz-, Liege- und Stützpolstern basiert auf der Kraft und Wegmessung wenigstens eines Prüfstempels, der flächig Kräfte auf eine Polsterfläche aufbringt, wobei parallel zur aufgebrachten Kraft eine Wegmessung der jeweiligen Verformung des zu untersuchenden Polsters erfolgt, wobei erfindungsgemäß vorteilhaft sowohl eine statische oder quasistatische Belastung des Polsters mit einer vordefinierten Kraft als auch eine dynamische Messung des Polsters dadurch erfolgt, dass die Krafteinwirkung abrupt beendet wird und die Bewegung des nachfolgenden Ausschwingens des Prüfstempels, welche durch die plötzliche Entlastung des Polsters und das damit in seine unbelastete Lage zurückgehende Polster verursacht wird, aufgenommen und ausgewertet wird. Es wird erfindungsgemäß in einem Messvorgang der Prüfstempel erst belastet und nachfolgend beginnend von dem erreichten Kraftniveau abrupt entlastet. Es kann damit die Verformung bei statischer bzw. quasistatischer Belastung durch das langsame Erhöhen der Druckkraft des Prüfstempels auf das Polster sowie das Zurückgehen der Polsterung in den unbelasteten Zustand, welche ein Maß für die Dämpfung des Polsters ist, in einem direkt nacheinanderfolgenden Messvorgang gemessen und ausgewertet werden, wobei zur Bestimmung wenigstens eines Komfortkennwertes sowohl die Parameter der Verformung bei statischer oder quasistatischer und bei dynamischer Belastung genutzt werden.

Erfindungsgemäß erfolgt in einer ersten Prüfstufe ausgehend vom unbelasteten Aufsitzen des Sitzprüfstempels ein langsames Erhöhen der auf das Polster einwirkenden Kraft. Die Kraft wird dabei durch kraft- oder weggeregeltes Verfahren des Prüfstempels - vorzugsweise rampenförmig ansteigend - erhöht. Es kann damit quasistatisch zur aufgebrachten Kraft die Verformung des Polsters gemessen werden. Zur quasistatischen Messung erfolgt die Krafterhöhung vorzugsweise mit einer Steigung, bei welcher der Widerstand, der durch die dynamischen Dämpfungseigenschaften des Sitzes der Verformung entgegengebracht wird, vernachlässigbar ist. Die Verformung und die jeweils aufgewandte Kraft werden fortlaufend gemessen. Beim Erreichen eines Verformungs- oder Kraftschwellwertes wird die Krafteinwirkung abrupt beendet. Das Polster geht mit einer charakteristischen Ausschwingfunktion (Antwortfunktion) wieder in den unbelasteten Zustand zurück. Die Verformung wird als Funktion der Zeit gemessen und anhand der Ausschwingfunktion, insbesondere deren Amplitude und Frequenz ist die Polsterung hinsichtlich ihres dynamischen Verhaltens bewertbar. Vorzugsweise wird dabei ein Dämpfungsparameter ermittelt. Nach dem rampenförmigen Erhöhen der über den Prüfstempel auf den Sitz einwirkenden Kraft und dem Erreichen eines ersten Kraftschwellwertes wird die Kraft über einen kurzen Zeitraum konstant gehalten und nachfolgend bis zum Erreichen eines zweiten Kraftschwellwertes erhöht, wobei beim Erreichen des zweiten Kraftschwellwertes die Krafteinwirkung abrupt beendet wird. Das Einfügen einer kurzen Wartezeit ist daher vorteilhaft, dass alle Übergangsvorgänge im Polster durch die Verformung abgeschlossen sind.

Erfindungsgemäß vorteilhaft wird ein kombinierter Komfortkennwert aus statischen und dynamischen Kennwerten der aufgenommenen Kraft-Weg Kennlinie ermittelt. In einer vorteilhaften Ausbildung werden Kraft-/ Weg-Kennwerte aus den Abschnitten Setzbereich, Kraftanstieg, Antwortfunktion und zweiter Setzbereich des Zeit-Weg-Diagramms bezogen auf die Messwerte Kraft, Weg, Zeit, Frequenz und Amplitude gebildet.

Eine Vorrichtung zur Durchführung eines Verfahrens zur Komfortbewertung von Sitz-, Liege- und Stützpolstern, insbesondere Fahrzeugsitzen ist mit wenigstens einem über dem Polster angeordneten Sitzprüfstempel versehen, welcher einen Antrieb aufweist, mittels dem eine Kraft über den Sitzprüfstempel auf eine Polsteroberfläche aufbringbar ist. Die Vorrichtung weist weiterhin eine Einheit zur Kraftmessung der vom Prüfstempel auf die Polsteroberfläche aufgebrachten Kraft und eine Wegmesseinheit zur Messung der Bewegung des Sitzprüfstempels auf, wobei der Sitzprüfstempel in einer Führung gehalten ist, über welche die Kraft eines Antriebs auf den Sitzprüfstempel übertragbar ist: Erfindungsgemäß vorteilhaft ist der Sitzprüfstempel in der Führung axial relativbeweglich zu dieser geführt und die Führung so ausgestaltet, dass über einen Auslösemechanismus der Prüfstempel willkürlich arretier- oder freigebbar ist. In vorteilhafter Weise wird damit die Vorrichtung zur Kraftübertragung über den Antrieb mit einem von diesem getrennten Auslösemechanismus kombiniert, so dass quasistatische Kräfte übertragen werden können und durch ein Freigeben der Arretierung die Kraftübertragung abrupt unterbrochen werden kann. Es kann damit ein freies Ausschwingen der Polsterung nach einer quasistatischen Verformung in einem nacheinanderfolgenden Messvorgang erfolgen. Es ist damit ein genaues Einstellen einer konstanten Haltekraft, beispielsweise mit einer Hubspindel, möglich, wobei durch den Auslösemechanismus eine abrupte Kraftunterbrechung realisierbar ist. Ein freies Ausschwingen der Polsterung kann somit gewährleistet werden, da der Ausschwingvorgang nicht durch die Verstellgeschwindigkeit des Antriebs des Sitzprüfstempels begrenzt ist. Gleichzeitig wird der Vorteil genutzt, mittels eines einfachen Antriebs eine genaue Einstellung einer Haltekraft zu ermöglichen.

In einer vorteilhaften Ausführungsform wird der Prüfstempel in einem Tragarm geführt, der vom Antrieb relativ höhenverstellbar zur Polsteroberfläche bewegbar ist und die vom Antrieb über den Tragarm übertragene Relativbewegung bei arretierter Führung wird über den Sitzprüfstempel und die Oberfläche des Polsters übertragen. In einfacher Weise ist der Tragarm an wenigstens einem Mast einer Aufnahmeplatte für den Sitz geführt, wobei über den Antrieb mittels einer Spindel der Tragarm in seiner Höhe relativ zur Aufnahmeplatte verstellbar ist. Es können gleichsam mehrere Masten vorgesehen sein, wobei der Sitzprüfstempel über mehrere Tragarme geführt werden kann. Eine weitere vorstellbare Ausführung weist beispielsweise zwei Masten auf, wobei der Sitzprüfstempel in einer diese überbrückenden Traverse (Tragarmen) geführt ist.
In einer vorteilhaften Ausführung ist der Auslösemechanismus, der als freigebbare Arretierung in der Führung des Prüfstempels ausgeführt ist, mittels einer elektromagnetischen Ver- bzw. Entriegelung versehen, welche von einer Steuereinheit ansteuerbar (d. h. arretier- bzw. lösbar) ist. Der Vorteil einer Magnetkupplung dieser Bauform liegt darin, dass die Bewegungsrichtung, hervorgerufen durch die Rückstellkraft, die Einflussgröße des sich abbauenden Magnetfeldes mit Zunahme der Entfernung exponentiell begünstigt wird.
Der Steuereinheit liegen die Signale der Wegmess- und/oder Kraftmesseinheit an, so dass diese ein Freigeben bzw. Arretieren der Führung auf Basis der Messsignale Kraft und/oder Weg steuern kann. Die Steuereinheit kann in einer vorteilhaften Ausgestaltung gleichzeitig zur Datenerfassung und Datenauswertung genutzt werden.

Weitere vorteilhafte Gestaltungen ergeben sich aus dem Ausführungsbeispiel und den Unteransprüchen. Die Erfindung wird nachfolgend anhand eines bevorzugten Ausführungsbeispiels beschrieben.

Die Zeichnungen zeigen:
- Fig. 1: eine Vorrichtung zur Komfortbewertung eines Sitzpolsters,
- Fig. 2: ein Diagramm des Verfahrweges s des Prüfstempels über der Zeit t bei verschiedenen Krafteinwirkungen auf den Prüfstempel.

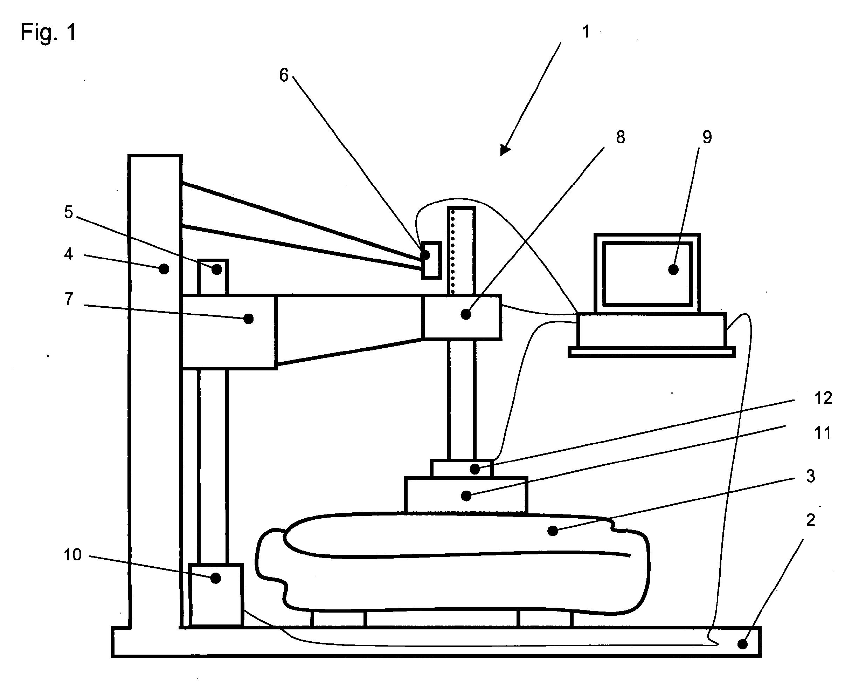

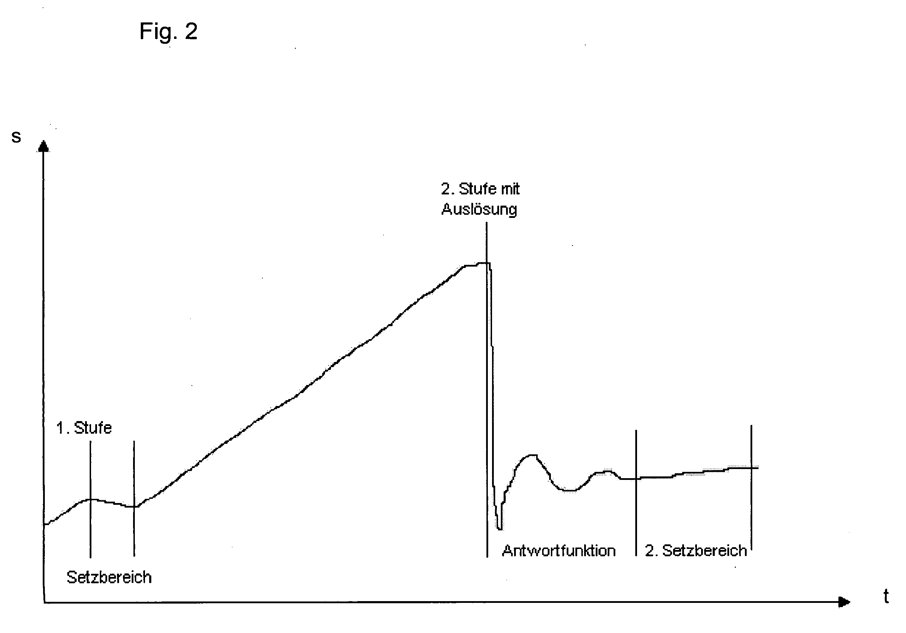

In Figur 1 ist eine Sitzprüfeinrichtung 1 dargestellt, welche einen mit einer Aufnahmeplatte 2 verbundenen Mast 4 mit einer Führung für einen Tragarm 7 aufweist. Der Tragarm 7 ist relativ zur Aufnahmeplatte 2 mittels eines Antriebs 10, dessen Antriebsbewegung über eine Hubspindel 5 übertragen wird, verstellbar. Auf der Aufnahmeplatte 2 ist ein Versuchskörper mit Polsterung, vorzugsweise ein Sitz 3 oder ein Teil eines Sitzes 3 montierbar. Auf den Sitz 3 wirkt ein Prüfstempel 11 ein, welcher in der gezeigten Ausführung flach auf dem Polster aufliegt. Der Prüfstempel 11 kann jedoch auch profiliert sein, um z. B. die Form einer sitzenden Person nachzubilden. Der Prüfstempel 11 weist eine Kraftmesseinheit 12 auf, welche die vom Antrieb 10 über eine Hubspindel 5 und einen Tragarm 7 aufgebrachte Kraft misst. Der Prüfstempel 11 ist dafür in einer Stempelführung 8 am Tragarm 7 gehalten, wobei die Stempelführung 8 einen Mechanismus aufweist, welcher den Prüfstempel 11 in der Stempelführung 8 arretieren kann. Die Arretierung ist willkürlich, vorzugsweise von einer Steuereinheit 9 aus steuerbar. Vorzugsweise wird eine elektromagnetisch ansteuerbare Arretierung gewählt, wobei ausgehend von einem Steuerbefehl der Steuereinheit 9 der Prüfstempel 11 über das Zu- bzw. Abschalten eines einen Elektromagneten erregenden Stromes eine Ver- bzw. Entriegelung des Prüfstempels 11 erfolgt. Im entriegelten Zustand ist der Prüfstempel 11 relativverschieblich in der Stempelführung 8 gehalten und liegt wie im gezeigten Ausführungsbeispiel durch sein Eigengewicht auf der Oberfläche des Sitzes 3 auf. Die Sitzprüfeinrichtung 1 weist weiterhin ein Wegmesssystem 6 auf, welches vorzugsweise berührungslos messend die Relativbewegung des Prüfstempels 11 zur Aufnahmeplatte 2 erfasst. Es handelt sich hierbei vorzugsweise um ein absolut messendes System, beispielsweise einen optischen Sensor, welcher eine Codierung auf dem Prüfstempel 11 erfasst. Das Wegmesssystem 6 ist am Mast 4 befestigt und in Relation zur Aufnahmeplatte 2 bzw. zu dem darauf angeordneten Sitz 3 festliegend. Es besteht in einer weiteren Ausführungsform die Möglichkeit, das Wegmesssystem 6 auf dem Tragarm 7 anzuordnen, wobei dann nur die Relativbewegung des Prüfstempels 11 zum Tragarm 7 gemessen werden kann. Für eine Bestimmung der Position gegenüber der Aufnahmeplatte 2 würde zusätzlich die Spindelposition benötigt. Im Betrieb der Sitzprüfeinrichtung 1 liegt nach Aufmontieren des Sitzes 3 der Prüfstempel 11 auf der Polsteroberfläche des Sitzes 3 auf. Der Tragarm 7 kann - wenn notwendig - in eine bevorzugte Ausgangsposition gefahren werden. Bei entriegeltem Auslösemechanismus der Stempelführung 8 bleibt der Prüfstempel 11 aufgrund seines Eigengewichtes mit der Oberfläche des Sitzes 3 in Kontakt. Für die Messung wird der Auslösemechanismus anschließend verriegelt. Der Tragarm 7 wird mittels des Antriebs 10 der Hubspindel 5 in Richtung Aufnahmeplatte 2 bewegt, wobei sich der Prüfstempel 11 in die Polsterung des Sitzes 3 eindrückt. Fortlaufend werden dabei die Messwerte des Wegmesssystems 6 und der Kraftmesseinheit 12 an eine Steuer-, Datenerfassungs- und Datenverarbeitungseinheit 9 übermittelt. Mit der beschriebenen Vorrichtung sind beliebige Druckkräfte auf die Polsterung über die Hubspindel 5 hochgenau einstellbar. Es kann sowohl die Druckkraft als auch die Verfahrgeschwindigkeit mittels des Antriebs 10 gesteuert werden. Ein bevorzugtes Verfahren zur Prüfung ist in der Beschreibung zu Fig. 2 beschrieben. Die Stempelführung 8 des Prüfstempels 11 mit dem steuerbar arretier- oder freigebbaren Auslösemechanismus gestattet in einer bevorzugten Betriebsart die Druckkraft, welche der Prüfstempel 11 auf die Polsterung aufbringt, langsam zu erhöhen und bei Erreichen eines vordefinierten Schwellwertes der Eindrücktiefe oder der aufgebrachten Druckkraft diesen zu entriegeln. Vorzugsweise ist der Auslösemechanismus elektromagnetisch ansteuerbar, so dass aufgrund der Datenerfassung über die Kraftmesseinheit 12 und/oder über das Wegmesssystem 6 die Datenerfassungs-, Datenverarbeitungs- und Steuereinheit 9 auf Basis eines Schwellwertes über einen Steuerbefehl den Auslösemechanismus betätigt. Der Prüfstempel 11 wird dann abrupt von seiner Haltekraft im Tragarm 7 gelöst und kann sich in vertikaler Ebene zum Sitz 3 relativ zu diesem bewegen. Aufgrund der vorher aufgebrachten Vorspannung wird der Prüfstempel 11 durch die Gegenkraft der Polsterung nach oben bewegt und schwingt ausgehend vom vorher erreichten Belastungsniveau lediglich durch die Gewichtskraft des Prüfstempels 11 belastet aus. Der Ausschwingvorgang ist über das Wegmesssystem 6 erfassbar und auf Basis der so erfassten Bewegungskurve ist durch die Analyse der Schwingung eine Komfortbewertung des Sitzes 3 hinsichtlich seiner Dämpfung und Steifigkeit möglich.

Figur 2 zeigt beispielhaft ein Diagramm mit dem Verfahrweg s des Prüfstempels 11 über der Zeit t bei verschiedenen Krafteinwirkungen auf den Prüfstempel 11. Im Verfahrweg s des Prüfstempels 11 bildet sich die Verformung des Sitzpolsters ab. Der Prüfstempel 11 wird dabei nach Aufsetzen auf der Polsterung vorzugsweise kraftgeregelt bis zu einer ersten Stufe (Kraftschwellwert 1) verfahren. Die einwirkende Kraft wird an dieser Stelle für einen kurzen Zeitraum konstant gehalten, wobei sich die Verformung s des Sitzes 3 aufgrund des Setzvorganges im Sitz 3 bei gleichbleibender Kraft verändert. Der Zeitraum des Setzbereiches ist dem Prüfkörper anzupassen, wobei technisch lange Zeiträume >10 sek. gleichwirkend, jedoch im Sinne eines effektiven Messablaufes, nicht notwendig sind. Nachfolgend wird die Andruckkraft des Prüfstempels 11 weiter erhöht und kraftgeregelt wird mit in Form einer ansteigenden Rampenfunktion die Andruckkraft erhöht und daraus resultierend der Prüfstempel 11 weiter verfahren. Das kraftgeregelte Verfahren des Prüfstempels 11 ist dabei eine bevorzugte Ausführungsform. Ein Verfahren entsprechend vorgebbarer Verformungen ist ebenfalls möglich. Beim Erreichen einer zweiten Stufe (zweiter Kraftschwellwert) erfolgt das Freigeben des Auslösemechanismus. Es erfolgt ein Ausschwingen des Prüfstempels 11 ohne einwirkende Druckkraft, wobei aus der Analyse der Schwingung der Antwortfunktion dynamische Parameter der Polsterung, wie Dämpfung, Eigenfrequenzen und dynamischer Komfortkennwert bestimmt werden. Die nachfolgende Komfortbewertung erfolgt auf Basis der dynamischen Parameter sowie der durch das quasistatische Verfahren des Prüfstempels 11 ermittelten Parameter, wie Eindrückweg, Steifigkeit und Setzbewegung. Es wird ein komplexes Bewertungsmaß aus den einzelnen Parametern der Abschnitte Setzbereich, Kraftanstieg, Antwortfunktion und dem zweiten Setzbereich, ermittelt.

### Bezugszeichenliste

- 1: Sitzprüfeinrichtung
- 2: Aufnahmeplatte
- 3: Sitz
- 4: Mast mit Führung
- 5: Hubspindel
- 6: Wegmesssystem
- 7: Tragarm
- 8: Stempelführung mit Auslösemechanismus
- 9: Steuer-, Datenerfassungs- und Datenverarbeitungseinheit
- 10: Antrieb (Spindelantrieb)
- 11: Prüfstempel
- 12: Kraftmesseinheit
- s: Verfahrweg des Prüfstempels
- t: Zeit

## Patentansprüche

1. Verfahren zur Komfortbewertung von Sitz-, Liege- und Stützpolstern, insbesondere Fahrzeugsitzen, bei welchem durch wenigstens einen Prüfstempel (11) flächig eine Druckkraft auf eine Polsteroberfläche aufgebracht wird, wobei eine Wegmessung der jeweiligen Verformung des zu untersuchenden Polsters und eine Kraftmessung der auf die Polsteroberfläche aufgebrachten Kraft erfolgt,
**dadurch gekennzeichnet,**
**dass** die auf die Polsteroberfläche aufgebrachte Kraft und die über ein Wegmesssystem (6) bestimmte Verformung aus mindestens einer ersten Messung von aufgebrachter Kraft und resultierender Verformung bei wenigstens einer vordefinierten quasistatisch wirkenden Kraft aufgenommen wird und nachfolgend die Krafteinwirkung abrupt beendet wird und die Bewegung des Prüfstempels (11) beim nachfolgenden Ausschwingen aufgenommen wird, wobei zur Komfortbewertung die Verformung bei quasistatischer Krafteinwirkung und beim Ausschwingen ausgewertet werden.

2. Verfahren nach Anspruch 1,
**dadurch gekennzeichnet,**
**dass** nach Aufsitzen des Prüfstempels (11) der Prüfstempel (11) kraftgeregelt mit einer rampenförmig ansteigenden Kraft belastet und beim Erreichen eines Kraftschwellwertes oder eines Schwellwertes der Verformung die Krafteinwirkung abrupt beendet wird.

3. Verfahren nach Anspruch 1,
**dadurch gekennzeichnet,**
**dass** die auf das Polster einwirkende Kraft rampenförmig bis zum Erreichen einer ersten Stufe bei einem ersten definierten Kraftschwellwert erhöht wird und nachfolgend die Kraft auf den Prüfstempel (11) über einen kurzen Zeitraum konstant gehalten und danach bis zum Erreichen eines zweiten Kraftschwellwertes (2. Stufe) erhöht wird, wobei beim Erreichen des zweiten Kraftschwellwertes die Krafteinwirkung abrupt beendet wird.

4. Vorrichtung zur Durchführung eines Verfahrens zur Komfortbewertung von Sitz-, Liege- und Stützpolstern, insbesondere Fahrzeugsitzen mit einem über dem Polster angeordneten Prüfstempel (11), welcher einen Antrieb (10) aufweist, mittels dem eine Kraft über den Prüfstempel (11) auf eine Polsteroberfläche aufbringbar ist, wobei die Vorrichtung eine Kraftmesseinheit (12) zum Messen der vom Prüfstempel (11) auf die Polsteroberfläche aufgebrachten Kraft und ein Wegmesssystem (6) zur Messung der Bewegung des Prüfstempels (11) aufweist,
**dadurch gekennzeichnet,**
**dass** der Prüfstempel (11) in einer Stempelführung (8) gehalten ist, über welche eine vom Antrieb (10) statisch und dynamisch auf den Prüfstempel (11) übertragbare Druckkraft über den Prüfstempel (11) auf die Polsteroberfläche aufbringbar ist, wobei die Stempelführung (8) den Prüfstempel (11) axial relativbeweglich führt und die Führung einen vom Antrieb (10) unabhängig ansteuerbaren Auslösemechanismus enthält, welcher den Prüfstempel (11) gesteuert arretiert oder freigibt.

5. Vorrichtung nach Anspruch 4,
**dadurch gekennzeichnet,**
**dass** die Stempelführung (8) des Prüfstempels (11) in einem Tragarm (7) erfolgt, der vom Antrieb (10) relativ höhenverstellbar zur Polsteroberfläche bewegbar ist und die vom Antrieb (10) über den Tragarm (7) übertragene Relativbewegung bei arretierter Stempelführung (8) über den Prüfstempel (11) auf die Oberfläche des Polsters überträgt.

6. Vorrichtung nach Anspruch 4 und 5,
**dadurch gekennzeichnet,**
**dass** der Tragarm (7) an wenigstens einem Mast (4) einer Aufnahmeplatte (2) für den Sitz (3) geführt ist, wobei über den Antrieb (10) mittels einer Hubspindel (5) der Tragarm (7) in seiner Höhe relativ zur Aufnahmeplatte (2) verstellbar ist.

7. Vorrichtung nach einem der vorherigen Ansprüche,
**dadurch gekennzeichnet,**
**dass** die Arretierung bzw. Freigabe der Stempelführung (8) über eine elektromagnetische Verrieglung erfolgt, welche von einer Steuereinheit (9) ansteuerbar ist.

8. Vorrichtung nach Anspruch 7,
**dadurch gekennzeichnet,**
**dass** der Steuereinheit (9) die Signale der Wegmess- (6) und/oder Kraftmesseinheit (12) anliegen.

9. Vorrichtung nach Anspruch 8,
**dadurch gekennzeichnet,**
**dass** die Steuereinheit (9) gleichzeitig zur Datenerfassung und Datenauswertung genutzt wird.
